Europäisches Patentamt

(19) European Patent Office

Office européen des brevets

(11) EP 0 880 249 A2

## (12) EUROPEAN PATENT APPLICATION

(43) Date of publication:
25.11.1998 Bulletin 1998/48

(51) Int. Cl.$^6$: **H04J 14/02**, H04B 10/17, H04B 10/18

(21) Application number: 98109090.5

(22) Date of filing: 19.05.1998

(84) Designated Contracting States:
AT BE CH CY DE DK ES FI FR GB GR IE IT LI LU MC NL PT SE
Designated Extension States:
AL LT LV MK RO SI

(30) Priority: 20.05.1997 JP 144536/97

(71) Applicant: NEC CORPORATION
Tokyo (JP)

(72) Inventors:
• Sasaki, Takamasa
c/o NEC Corporation
Tokyo (JP)
• Tajima, Tsutomu
c/o NEC Corporation
Tokyo (JP)

(74) Representative:
VOSSIUS & PARTNER
Siebertstrasse 4
81675 München (DE)

### (54) FWM Light suppressing system

(57) Disclosed is a FWM light suppressing system for optical wavelength division multiplexing transmission using a transmission line optical fiber, comprising: means for suppressing four-wave mixing (FWM) light to be generated in the transmission line optical fiber, the FWM light suppressing means being disposed at a repeating part of the transmission line optical fiber; wherein main signals are transmitted through the transmission line optical fiber at non-uniform frequency intervals.

*FIG.3*

1 OPTICAL TRANSMITTERS
2 OPTICAL MULTIPLEXER
3 OPTICAL AMPLIFIER FOR TRANSMISSION
5 OPTICAL AMPLIFIER FOR REPEATING
4 TRANSMISSION LINE OPTICAL FIBER
6 OPTICAL DEMULTIPLEXER
7 OPTICAL RECEIVERS

EP 0 880 249 A2

## Description

This invention relates to a linear repeating transmission of wavelength division multiplexing (WDM) optical signal, and more particularly to, a system for suppressing four-wave mixing (FWM) light to be generated in an optical transmission line.

Suppressing four-wave mixing (hereinafter referred to as 'FWM') light to be generated in optical fiber has been a pending problem in wavelength division multiplexing (hereinafter referred to as 'WDM') optical transmission systems that several signal lights with different wavelengths are multiplexed and transmitted through a optical fiber transmission line.

At first, FWM will be explained below. When three lights with different frequencies are input to an optical fiber, there occurs a small non-linear polarization as well as a polarization proportional to the electric filed of each light in the optical fiber medium. For example, when the frequencies of lights input are f1, f2 and f3, the non-linear polarization for the input light includes frequency components to be generated from the combination of f1, f2 and f3, other than the original frequency components f1, f2 and f3.

Such a phenomenon that the fourth light is generated from the three lights is called four-wave mixing (FWM), and the light thus generated is called FWM light.

The frequency $f_{ijk}$ of the FWM light is represented by:

$$f_{ijk} = f_i + f_j - f_k \ (i,j \neq k)$$

where the three frequencies input are represented by $f_i$, $f_j$ and $f_k$.

It is known that a dispersion shift fiber (hereinafter referred to as 'DSF') generally used limits severely a normal WDM operation. Although making the dispersion zero is important for minimizing the capacity limitation due to dispersion, it causes a deterioration due to FWM and limits the effective optical input level to fiber.

For example, a system for conducting a WDM transmission while suppressing the noise due to FWM is suggested in Japanese patent application laid-open No. 8-18540(1996). In this system, an optical fiber just after a transmitter or an amplifier is set to have a negative dispersion (ordinary dispersion) and the other optical fibers are set to have a positive dispersion (extraordinary dispersion). This means to implement the optical fibers with different dispersions. Namely, it is difficult to apply the system to DSF already installed.

As an approach to conducting a WDM transmission while using an already-installed DSF, a system that channel frequencies are assigned at non-uniform intervals to avoid the correspondence between the signal wavelength and an FWM-generating wavelength is proposed. However, in this system, there occurs high-order FWM light in a multistage connection composition of linear repeaters. This causes a crosstalk to signal light that may limit the transmission distance.

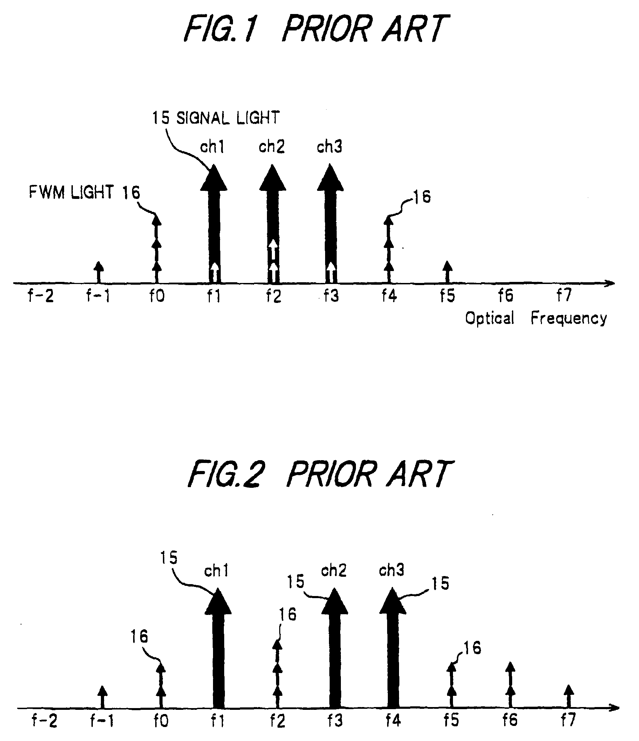

FIG.1 shows FWM lights generated when three-channel frequencies (f1, f2, f3) are positioned at uniform intervals. It will be appreciated that FWM light 16 becomes a crosstalk to signal light 15 as the frequency of FWM light corresponds to the frequency of signal light 15.

Also, FIG.2 shows FWM lights generated when three-channel frequencies (f1, f3, f4) are positioned at non-uniform intervals. The frequency of first-order FWM light 16 does not correspond to the frequency of signal light 15, but the positional relation between the first-order FWM light 16 and the signal light 15 is similar to that at the uniform intervals in FIG.1. Therefore, high-order FWM light generated by the FWM light and signal light becomes a crosstalk to the signal light.

As described above, setting the signal frequency of each channel to be at non-uniform intervals in the linear repeating system for WDM transmission using an already-installed DSF can prevent a crosstalk caused by low-order FWM light from generating. However, in this system, the low-order FWM light has to be linear-repeated with the signal light in multistage linear repeating, thereby generating the high-order FWM light. This causes a crosstalk to signal light that may limit the transmission distance.

Accordingly, it is an object of the invention to provide a FWM light suppressing system that can prevent the high-order FWM light from generating in multistage linear repeating, thereby improving the transmission quality and lengthening the transmission distance for WDM linear repeating transmission.

According to the invention, a FWM light suppressing system for optical wavelength division multiplexing transmission using a transmission line optical fiber, comprises:

means for suppressing four-wave mixing (FWM) light to be generated in the transmission line optical fiber, the FWM light suppressing means being disposed at a repeating part of the transmission line optical fiber;

wherein main signals are transmitted through the transmission line optical fiber at non-uniform frequency intervals.

According to another aspect of the invention, a FWM light suppressing system for optical wavelength division multiplexing transmission using a transmission line optical fiber, comprises: a plurality of optical transmitters with different wavelengths, means for multiplexing signal lights from the plurality of optical transmitters, an optical amplifier for transmission for amplifying the multiplexed signal light, transmission line optical fibers with a dispersion value of zero or nearly zero in the working wavelength band that the signal light output from the optical amplifier is transmitted, optical amplifiers for repeating that are inserted among the transmission line optical fibers, means for demultiplexing the received signal light into the signal lights with the different wavelengths, and a plurality of optical receivers for receiving the signal lights demultiplexed.

In this invention, FWM crosstalk can be avoided by setting the channel frequency at non-uniform intervals so that the low-order FWM light wavelength does not correspond to the channel frequency, even when the FWM light generates in the optical fiber for optical WDM transmission. Furthermore, the repeating part including an optical amplifier etc. can pass only the signal light component of input lights, thereby removing the low-order FWM light. As a result, the high-order FWM light that may be generated by the channel wavelength light and the low-order FWM light can be suppressed. Namely, by linear-repeating at the linear repeaters while suppressing the FWM light, a crosstalk due to the high-order FWM light can be suppressed.

The invention will be explained in more detail in conjunction with the appended drawings, wherein:

FIG.1 is an illustration showing FWM lights generated when the three channel frequencies (f1, f2, f3) are positioned at uniform intervals,
FIG.2 is an illustration showing FWM lights generated when the three channel frequencies (f1, f2, f3) are positioned at non-uniform intervals,
FIG. 3 is a block diagram showing a FWM light suppressing system in a preferred embodiment according to the invention,
FIGS.4A to 4C are illustrations showing the principle of the invention for suppressing the high-order FWM light,
FIGS.5 is a block diagram showing the composition of an optical amplifier for repeating 5 in FIG. 3,
FIG.6 is a block diagram showing an example of a FWM light suppressing means 14 in FIG.5,
FIG.7 is a block diagram showing another example of the FWM light suppressing means 14 in FIG.5, and
FIG.8 is a block diagram showing a further example of the FWM light suppressing means 14 in FIG.5.

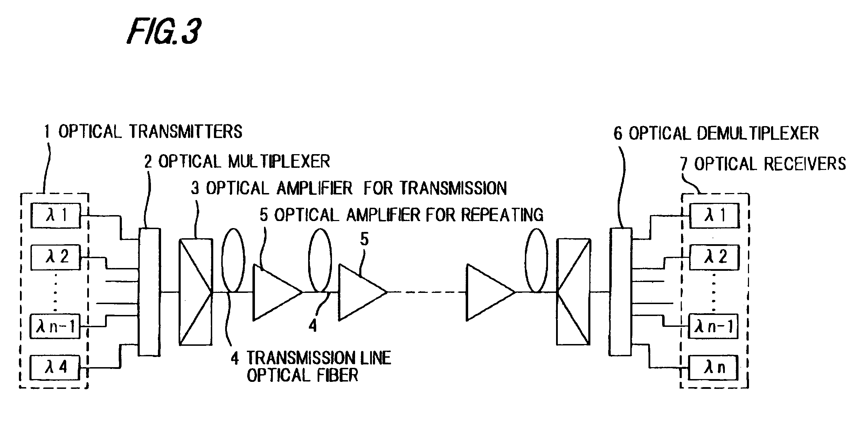

A FWM light suppressing system in the preferred embodiment will be explained in FIG. 3. As shown in FIG. 3, the FWM light suppressing system comprises several optical transmitters 1 ($\lambda$1, $\lambda$2,....., $\lambda$n) with different wavelengths, an optical multiplexer 2 for multiplexing signal lights (main signals) from the respective optical transmitters, an optical amplifier for transmission 3 for amplifying the multiplexed signal light. transmission line optical fibers 4 with a dispersion value of zero or nearly zero in the working wavelength band that the signal light output from the optical amplifier 3 is transmitted, optical amplifiers for repeating 5 that are inserted among the transmission line optical fibers 4, an optical demultiplexer 6 for demultiplexing the received signal light into the signal lights with the different wavelengths, and several optical receivers 7 ($\lambda$1, $\lambda$2,....., $\lambda$n) for receiving the signal lights demultiplexed.

In the optical transmitters 1, the channel frequency intervals are set to be non-uniform so as to avoid a crosstalk caused by low-order FWM light in the transmission line optical fiber 4. The optical multiplexer 2 has the function that multiplexes lights from the optical transmitters 1. The optical amplifier for transmission 3 has the function that amplifies the multiplexed signal light. The optical fiber 4 has the characteristic that the dispersion value is zero or nearly zero in the working wavelength band. The optical amplifier for repeating 5 is provided with a device to suppress the low-order FWM light and amplifies only the signal light component of the light to be input and outputs it to the next-stage transmission line optical fiber 4. The optical demultiplexer 6 has the function that demultiplexes the received light into the respective channel frequencies. The optical receivers 7 receive the signal lights demultiplexed.

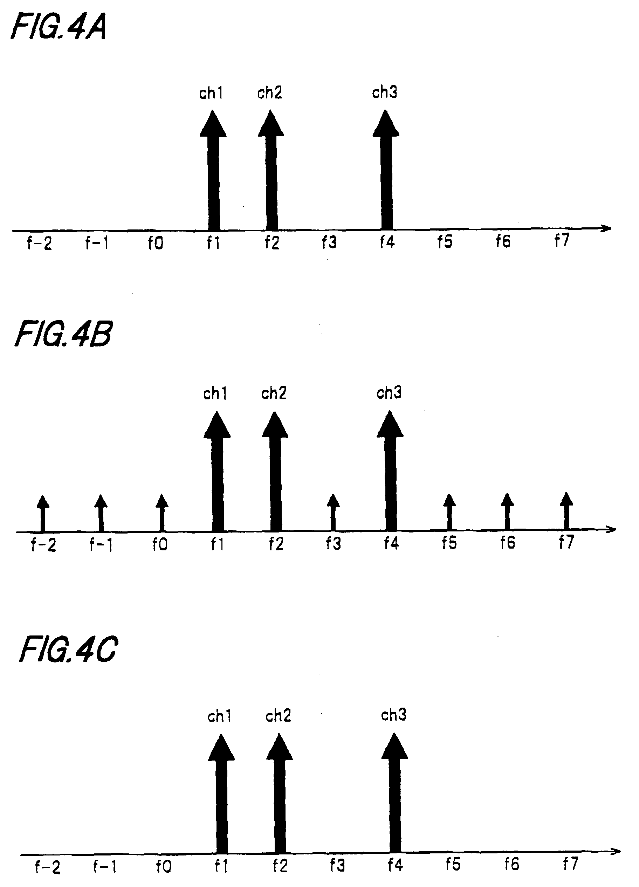

FIGS.4A to 4C illustrate the high-order FWM light suppressing principle in the embodiment. Namely, in this embodiment, the respective channel frequencies in WDM transmission are, as shown in FIG.4A, positioned at non-uniform intervals. This prevents the low-order FWM light from corresponding to the channel frequencies as shown in FIG.4B. Furthermore, the low-order FWM light is, as shown in FIG.4C, removed by using the FWM light suppressing device in the optical amplifier for linear repeating 5 as the low-order FWM light and signal light are positioned at uniform frequency intervals. As a result, it can prevent the high-order FWM light from generating in the next-stage transmission line optical fiber.

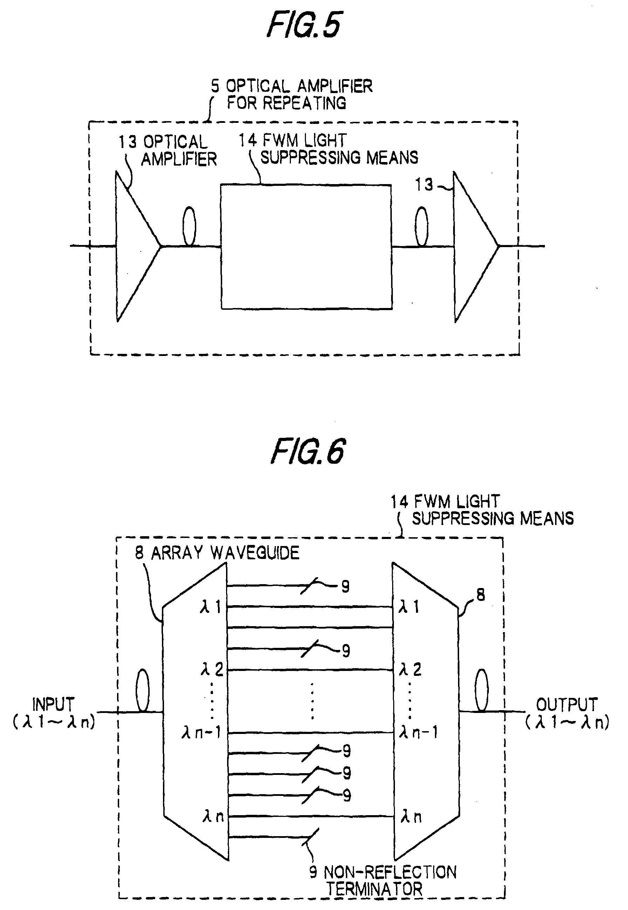

FIG.5 shows the composition of the optical fiber for repeating 5 in this embodiment. The optical fiber for repeating 5 is provided with a FWM light suppressing means. Further, optical amplifiers 13 are disposed before and after the FWM light suppressing means 14.

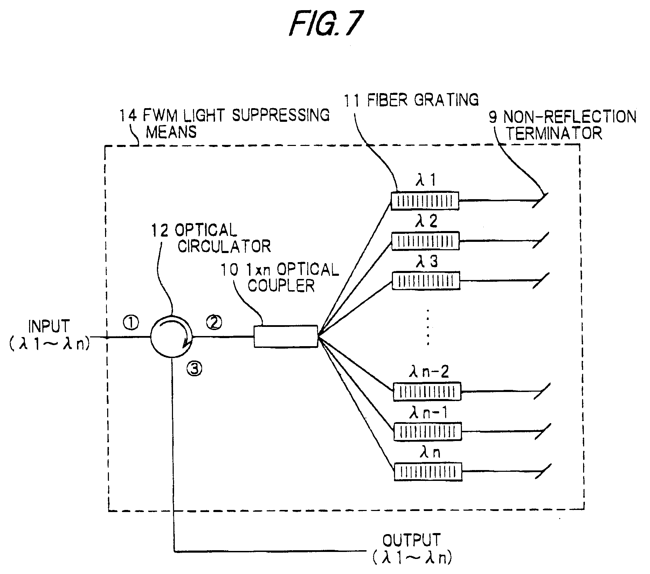

A first example of the FWM light suppressing means 14 will be explained below. In FIG.6, the FWM light suppressing means 14 using array waveguide gratings (hereinafter referred to as 'AWG') 8 is shown. AWG is composed of AWG 8 on the input side and AWG 8 on the output side between which several ports are mutually connected. AWG 8 on the input side has the function that divides the input signal light by a certain wavelength unit and distributes the respective wavelength lights to the individual output ports. AWG 8 on the output side has the function that multiplexes lights to be input to the several input ports.

Light including FWM light and signal light to be generated in the transmission line optical fiber is input to AWG 8 on the input side, where the signal light and FWM light are separately output to different output ports. The output port to which the FWM light is output is terminated by a non-reflection terminator 9 to absorb the FWM light. The output port to which the signal light is output is connected with one of the several ports of AWG 8 on the output side. Thereby, the signal lights are multiplexed by AWG 8 and output from there. Thus, only the WDM signal light can be output from the output port of AWG 8 on the output side while removing the FWM lights. Therefore, it can prevent the high-order FWM light from generating in the next-stage transmission line optical fiber, thereby suppressing a crosstalk.

A second example of the FWM light suppressing means 14 will be explained below. In FIG.7, the FWM light suppressing means 14 using a 1xn optical coupler 10 and several fiber gratings 11 is shown. n means the number of channels for WDM transmission, and the channel wavelengths are defined as $\lambda 1$ to $\lambda n$. The n fiber gratings 11, each of which corresponds to one channel, reflect the channel wavelengths.

Light to be input to the FWM light suppressing means 14 is input to port 1 of an optical circulator 12 and then output from port 2 thereof. The light output from port 2 is input to the 1xn optical coupler 10 and divided to n output ports. The divided light is input to the fiber grating 11. The fiber grating 11 corresponding to the individual channel reflects the signal light wavelength for its channel and passes the other wavelength components. The light passing through the fiber grating 11 is absorbed by a non-reflection terminator 9.

On the other hand, the signal light component reflected by the fiber grating 11 is coupled again by the 1xn optical coupler, input to port 2 of the optical circulator 12 and then output from port 3 thereof. Thus, only the signal light wavelength for each channel is reflected from the corresponding fiber grating 11 to the 1xn optical coupler 10 and then output from port 3 of the optical circulator 12. Therefore, the FWM light can be removed.

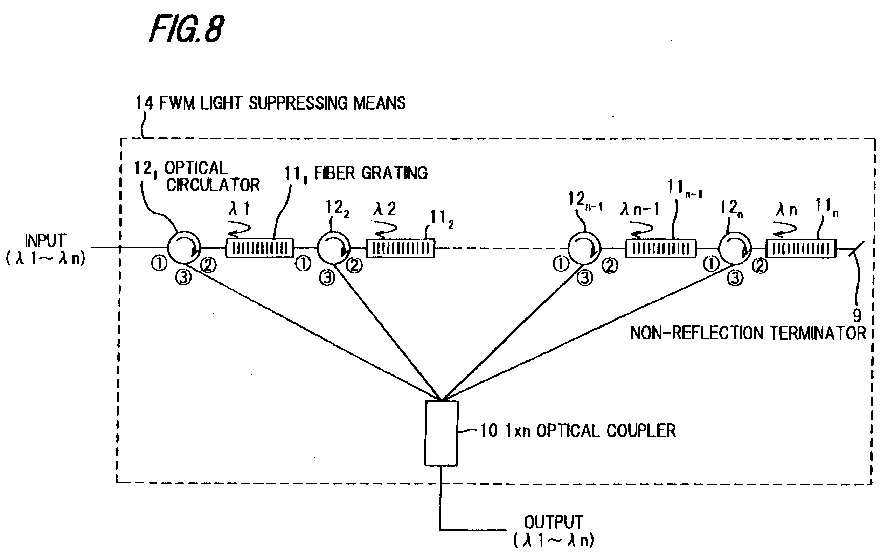

A third example of the FWM light suppressing means 14 will be explained below. In FIG.8, the FWM light suppressing means 14 using several fiber gratings $11_1$ to $11_n$ and optical circulators $12_1$ to $12_n$ that are in series connected is shown. The signal light wavelengths are defined as $\lambda 1$ to $\lambda n$, and the fiber gratings $11_1$, $11_2$, ....., $11_n$ are individually set to reflect the corresponding signal light with one of the wavelengths. The light to be input to the FWM light suppressing means 14 is input to port 1 of the optical circulator $12_1$ and output from port 2 thereof. The light output from port 2 is input to the fiber grating $11_1$. The signal wavelength $\lambda 1$ reflected by the fiber grating $11_1$ is input to port 2 of the optical circulator $12_1$ and output from port 3 thereof. The light passed through the fiber grating $11_1$ is, in like manner, passed through the next-stage optical circulator $12_2$, then input to the fiber grating $11_2$. The signal wavelength $\lambda 2$ is reflected at the fiber grating $11_2$, output from port 3 of the optical circulator $12_2$.

The light passing through all the fiber gratings $11_1$ to $11_n$ corresponding the respective channels in like manner is a FWM noise component and is absorbed by a non-reflection terminator 9 connected to the final stage.

On the other hand, the signal light component is always reflected by any of the fiber gratings $11_1$ to $11_n$, output from port 3 of the corresponding optical circulator. Thus, only the signal wavelength component is multiplexed by a 1xn optical coupler 10 and output from there. Therefore, it can prevent the high-order FWM light from generating in the transmission line optical fiber, thereby suppressing a crosstalk.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

**Claims**

1. A FWM light suppressing system for optical wavelength division multiplexing transmission using a transmission line optical fiber, comprising:

   means for suppressing four-wave mixing (FWM) light to be generated in said transmission line optical fiber, said FWM light suppressing means being disposed at a repeating part of said transmission line optical fiber;
   wherein main signals are transmitted through said transmission line optical fiber at non-uniform frequency intervals.

2. A FWM light suppressing system, according to claim 1, wherein:

   said FWM light suppressing means comprises array waveguide gratings whose ports for main signal wavelength are mutually connected.

3. A FWM light suppressing system, according to claim 1, wherein:

   said FWM light suppressing means comprises a 1:n optical coupler and a plurality of fiber gratings connected with said 1:n optical coupler, each of said plurality of fiber gratings reflecting main only signal wavelength light;
   wherein only main signals to be reflected by said plurality of fiber gratings are output so as to suppress said FWM light.

4. A FWM light suppressing system, according to claim 1, wherein:

   said FWM light suppressing means comprises a plurality of fiber gratings in series connected, each of said plurality of fiber gratings reflecting only main signal wavelength light;
   wherein only main signals to be reflected by said plurality of fiber gratings are output so as to suppress said FWM light.

5.  A system according to claim 2, 3 or 4, wherein:

    said array waveguide gratings are provided with non-reflection terminators to absorb said FWM light.

6.  A system according to any one of claims 1 to 5, wherein;

    said repeating part is provided with a linear optical amplifier comprising an optical amplifier on the input side, said FWM light suppressing means connected with said optical amplifier on the input side, and an optical amplifier on the output side.

7.  A FWM light suppressing system for optical wavelength division multiplexing transmission using a transmission line optical fiber, comprising:

    a plurality of optical transmitters with different wavelengths;
    means for multiplexing signal lights from said plurality of optical transmitters;
    an optical amplifier for transmission for amplifying the multiplexed signal light;
    transmission line optical fibers with a dispersion value of zero or nearly zero in the working wavelength band that the signal light output from said optical amplifier for transmission is transmitted;
    optical amplifiers for repeating that are inserted among the transmission line optical fibers;
    means for demultiplexing the received signal light into the signal lights with the different wavelengths; and
    a plurality of optical receivers for receiving the signal lights demultiplexed.

# FIG.1  PRIOR ART

15 SIGNAL LIGHT

ch1    ch2    ch3

FWM LIGHT 16

−16

f−2    f−1    f0    f1    f2    f3    f4    f5    f6    f7

Optical  Frequency

# FIG.2  PRIOR ART

15

ch1    15    ch2    ch3    15

16    16

16

16

f−2    f−1    f0    f1    f2    f3    f4    f5    f6    f7

FIG.3

1 OPTICAL TRANSMITTERS
2 OPTICAL MULTIPLEXER
3 OPTICAL AMPLIFIER FOR TRANSMISSION
5 OPTICAL AMPLIFIER FOR REPEATING
4 TRANSMISSION LINE OPTICAL FIBER
6 OPTICAL DEMULTIPLEXER
7 OPTICAL RECEIVERS

λ1  λ2  λn-1  λn
λ1  λ2  λn-1  λ4

## FIG.4A

ch1    ch2       ch3

f-2   f-1   f0   f1   f2   f3   f4   f5   f6   f7

## FIG.4B

ch1    ch2       ch3

f-2   f-1   f0   f1   f2   f3   f4   f5   f6   f7

## FIG.4C

ch1    ch2       ch3

f-2   f-1   f0   f1   f2   f3   f4   f5   f6   f7

## FIG.5

5 OPTICAL AMPLIFIER FOR REPEATING

13 OPTICAL AMPLIFIER

14 FWM LIGHT SUPPRESSING MEANS

13

## FIG.6

14 FWM LIGHT SUPPRESSING MEANS

8 ARRAY WAVEGUIDE

9

$\lambda 1$   9   $\lambda 1$   8

$\lambda 2$   9   $\lambda 2$

INPUT
$(\lambda 1 \sim \lambda n)$

$\lambda n-1$   $\lambda n-1$

9
9
9

$\lambda n$   $\lambda n$

OUTPUT
$(\lambda 1 \sim \lambda n)$

9 NON-REFLECTION TERMINATOR

## FIG.7

# FIG.8

INPUT
($\lambda$1$\sim$$\lambda$n)

14 FWM LIGHT SUPPRESSING MEANS

12₁ OPTICAL CIRCULATOR

①
③
②

$\lambda$1

11₁ FIBER GRATING

①
③
②

12₂  $\lambda$2

11₂

10 1xn OPTICAL COUPLER

OUTPUT
($\lambda$1$\sim$$\lambda$n)

①
③
②

12ₙ₋₁  $\lambda$n-1

11ₙ₋₁

NON-REFLECTION TERMINATOR

①
③
②

12ₙ  $\lambda$n

11ₙ

9